(19) Europäisches Patentamt
European Patent Office
Office européen des brevets

(11) **EP 3 219 433 A1**

(12) **EUROPEAN PATENT APPLICATION**
published in accordance with Art. 153(4) EPC

(43) Date of publication:
**20.09.2017 Bulletin 2017/38**

(21) Application number: **15859026.5**

(22) Date of filing: **06.11.2015**

(51) Int Cl.:
**B23K 35/363** (2006.01)

(86) International application number:
**PCT/JP2015/081308**

(87) International publication number:
**WO 2016/076220 (19.05.2016 Gazette 2016/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.11.2014 JP 2014229886**

(71) Applicant: **Senju Metal Industry Co., Ltd**
**Tokyo 120-8555 (JP)**

(72) Inventors:
• **TAKAGI Kazuyori**
  **Tokyo 120-8555 (JP)**

• **HAYASHIDA Toru**
  **Tokyo 120-8555 (JP)**
• **HASHIMOTO Yutaka**
  **Tokyo 120-8555 (JP)**
• **TAKEMASA Tetsu**
  **Tokyo 120-8555 (JP)**
• **MIYAGI Nanako**
  **Tokyo 120-8555 (JP)**
• **INABA Ko**
  **Tokyo 120-8555 (JP)**

(74) Representative: **D Young & Co LLP**
**120 Holborn**
**London EC1N 2DY (GB)**

(54) **FLUX FOR SOLDER PASTE, SOLDER PASTE, AND JOINED BODY**

(57) Provided is a flux for a solder paste that can prevent peeling from electrode, which is seen in a component, a thickness of which is reduced, such a semiconductor package like BGA. Rosin, a glycol-ether-based solvent, an organic acid, a thixotropic agent, a halogen compound, and an imidazole compound are contained and the halogen compound is either an amine hydrohalide or an organohalogen compound or a combination of them. Their addition amounts stay within a range satisfying a formula of $2.5-X-0.625Y \geq 0$ in which the addition amount of the amine hydrohalide is indicated by X (weight %) and the addition amount of the organohalogen compound is indicated by Y (weight %). However, the addition amount X of the amine hydrohalide and the addition amount Y of the organohalogen compound are such that $0 \leq X \leq 2.5$ and $0 \leq Y \leq 4$, excluding a range of $0 \leq X < 0.02$ and $0 \leq Y < 0.1$.

EP 3 219 433 A1

**Description**

[TECHNICAL FIELD]

The present invention relates to a flux for a solder paste that forms the solder paste by mixing solder alloy powder therewith, the solder paste formed by mixing the flux with the solder alloy powder, and a solder joint joined by using the solder paste.

[BACKGROUND]

The flux used for soldering generally has efficacy to remove an oxide film from the solder and a subject to be soldered and to suppress reoxidation, at a temperature that is lower than a melting temperature of the solder alloy.

The solder paste is a composite material obtained by mixing the solder alloy powder with the flux. The soldering is performed such that the solder paste is applied to a soldered portion such as an electrode of a substrate or the like; a component is mounted on the soldered portion to which the solder paste has been applied; and the substrate is heated in a heating furnace called as a reflow furnace to melt the solder. For example, in a reflow temperature profile of Sn-3Ag-0.5Cu, which is a now widely used solder alloy, a preliminary heating is performed from a start of heating in the furnace to the solder alloy melting temperature and a main heating is performed above 220 degrees C that is a melting temperature of the solder alloy. Particularly, a temperature zone of 150 degrees C or more is generally set to be a main active temperature zone of the flux. It is to be noted that the reflow temperature profile differs in every solder alloy.

In association with miniaturization of information equipment, electronic components to be installed in the information equipment also have rapidly developed to be reduced in thickness thereof in recent years. In order to cope with narrowing of the connection terminal and/or reduction of the mounting area by any requirement of the thickness reduction, a ball grid array (hereinafter, referred to as "BGA") in which electrodes are provided on a back surface thereof has been applied to the electronic component (see, for example, Patent Document 1). By the narrowing of the connection terminal, it has been also applied to the high performance of electronic component because multiple pin count increase can have been realized even when the component has the same size as that of the prior one.

As the electronic component to which the BGA is applied is, for example, a semiconductor package is exemplified. In the semiconductor package, a semiconductor chip having electrodes is sealed with resin. On the electrodes of the semiconductor package, solder bumps are formed. Each solder bump is formed by joining a solder ball to the electrode of the semiconductor package.

In the semiconductor package to which the BGA is applied, the solder bumps are mounted on the electrodes of the substrate to which solder paste has been applied with each of the solder bumps being aligned and by joining the solder bumps to the electrodes through thermally melted solder paste, the semiconductor package is installed onto the substrate.

As a problem of the solder joining of prior BGA, fusion failure between the solder bump and the solder paste is exemplified. The semiconductor package starts being bent by heating but in a main heating step, the solder alloy in the solder paste is melted so that the semiconductor package supported by the substrate through the solder paste creeps down and the solder paste and the electrode, which have been away from each other by the bend of the semiconductor package, are again connected to each other. However, since activator component in the flux volatilizes by heating in the reflow process, it is impossible to remove metal oxide film from a surface of the electrode even when the solder paste contacts the electrode in the main heating step. Therefore, the solder alloy in the solder paste and the electrode are not fused even before the solder alloy in the solder paste solidifies. This causes any failure in the joining between the solder bump of the semiconductor package and the electrode of the substrate to occur.

[DOCUMENTS FOR PRIOR ART]

[PATENT DOCUMENTS]

Patent Document 1: Japanese Patent Application Publication No. 2008-71779

[SUMMARY OF THE INVENTION]

[PROBLEMS TO BE SOLVED BY THE INVENTION]

The semiconductor package to which BGA has been applied has been required to be reduced in thickness thereof in recent years so that the semiconductor package has been also developed to be reduced in thickness thereof. Accordingly, by developing a semiconductor chip to be reduced in thickness thereof, the bend generating in the semiconductor package at a lower temperature range than the main active temperature zone of the flux, which can have been formerly ignored, by heating during the reflow is increased. This has become a new problem in the soldering.

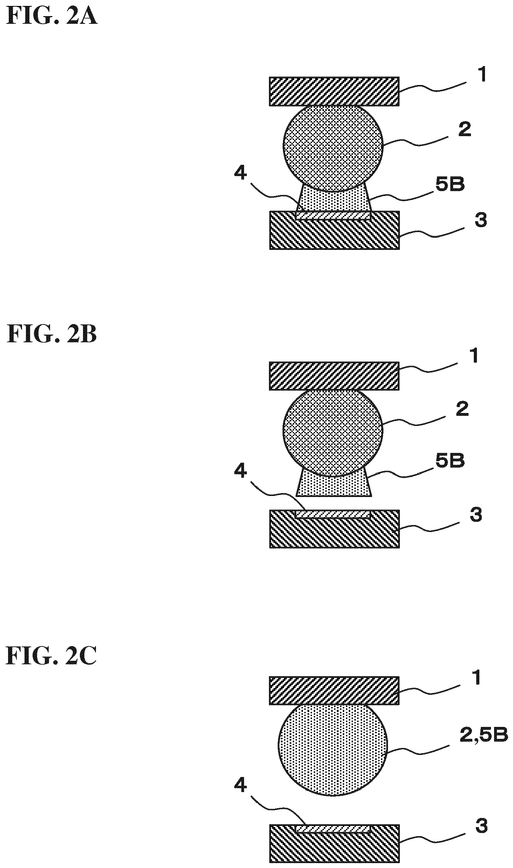

FIGS. 2A, 2B and 2C are diagrams showing a problem when the semiconductor package has been reduced in thickness thereof. A solder bump 2 is formed to an electrode, not shown, of a semiconductor package 1. Further, a solder paste 5B is applied onto an electrode 4 of a substrate 3. As shown in FIG. 2A, in a step before the reflow, the solder bump 2 contacts the solder paste 5B applied to the electrode 4.

In the preliminary heating step during the reflow, temperature of the substrate 3 and the like is gradually increased in the temperature lower than the melting temperature of the solder alloy. By reducing the thickness of semiconductor package 1, the bend occurs in the semiconductor package 1 in the low temperature range of about 120 degrees C to about 150 degrees C that is lower temperature range than the main active temperature zone of the flux.

The bends occur at whole of the semiconductor package 1. Among them, particularly, at an end portion of the component in which the bend is great, a phenomenon such that the solder paste 5 B is peeled from the electrode 4 while the solder paste is adhered to a side of the solder bump 2 is seen, as shown in FIG. 2B. When the temperature in the furnace is increased up to the main heating temperature while the solder paste 5 B is thus peeled from the electrode 4 by occurrence of the bend in the semiconductor package 1 at the low temperature range, the solder alloy in the solder paste 5B is melted, as shown in FIG. 2C, so that the solder alloy in the solder paste 5B is fused to the solder bump 2.

By, thus, peeling the solder paste 5B from the electrode 4, the molten solder paste 5B and the electrode 4 do not have any sufficient contact area and time for the solder joining or cannot be contacted at the main heating time, so that the activator component in the flux cannot react sufficiently with the metal oxide film on the surface of the electrode 4. Therefore, the metal oxide film of the surface of the electrode 4 cannot be removed.

The present invention solves such problems and has an object to provide a flux for a solder paste and the solder paste that can prevent the solder paste from being peeled from the electrode, by particularly paying into attention the bend of the component which occurs in the low temperature range that is lower than the main active temperature zone of the flux, in addition to any prior problems.

[MEANS FOR SOLVING THE PROBLEMS]

In the low temperature range in which the bend of the thinned semiconductor package or the like and substrate starts, the solder alloy in the solder paste has not yet reacted with the flux in general. The inventors of this application have found that when removing the metal oxide film in such low temperature range, adhesion of metal powder to each other is increased so that even if any bend occurs in the substrate, it is possible to prevent the solder paste from being peeled from the electrode.

The present invention relates to a flux for a solder paste, the flux containing rosin, a glycol-ether-based solvent, an organic acid, a thixotropic agent, a halogen compound and an imidazole compound, wherein the halogen compound is either an amine hydrohalide or an organohalogen compound or a combination of them, an addition amount of the amine hydrohalide is 0 weight % or more to 2.5 weight % and an addition amount of the organohalogen compound is 0 weight % or more to 4 weight %. However, when the addition amount of the amine hydrohalide is 0 weight % or more to less than 0.02 weight %, the addition amount of the organohalogen compound of 0 weight % or more to less than 0.1 weight % is excluded, when the addition amount of the organohalogen compound is 0 weight % or more to less than 0.1 weight %, the addition amount of the amine hydrohalide of 0 weight % or more to less than 0.02 weight % is excluded. If the above-described range is briefly described, the addition amount of the amine hydrohalide and the addition amount of the organohalogen compound stay within a range satisfying a formula (1) as follows, in which the addition amount of the amine hydrohalide is indicated by X (weight %) and the addition amount of the organohalogen compound is indicated by Y (weight %), and an addition amount of the imidazole compound is 0.1 weight % to 10 weight %.

[Numerical Formula 1]

$$2.5 - X - 0.625Y \geq 0 \ \ldots (1)$$

$$0 \leq X \leq 2.5$$

$$0 \leq Y \leq 4$$

However, a range of $0 \leq X < 0.02$ and $0 \leq Y < 0.1$ is excluded.

The amine hydrohalide and the organohalogen compound are added as activators for reacting with the metal oxide film at a predetermined low temperature range to remove the metal oxide film.

The imidazole compound is added as activator for reacting with the metal oxide film at a predetermined low temperature range to remove the metal oxide film. It is preferable that the imidazole compound includes any of imidazole, 2-ethyl-4-methylimidazole, 4-methyl-2-phenylimidazole, 2- phenylimidazole, 2-ethylimidazole, and 2-methylimidazole, or a combination of them.

Further, this invention relates to a solder paste mixing the flux with solder alloy powder. The flux contains rosin, a glycol-ether-based solvent, an organic acid, a thixotropic agent, a halogen compound and an imidazole compound, wherein the halogen compound is either an amine hydrohalide or an organohalogen compound or a combination of them, an addition amount of the amine hydrohalide is 0 weight % or more to 2.5 weight % and an addition amount of the organohalogen compound is 0 weight % or more to 4 weight %. However, when the addition amount of the amine hydrohalide is 0 weight % or more to less than 0.02 weight %, the addition amount of the organohalogen compound of 0 weight % or more to less than 0.1 weight % is excluded, when the addition amount of the organohalogen compound is 0 weight % or more to less than 0.1 weight %, the addition amount of the amine hydrohalide of 0 weight % or more to less than 0.02 weight % is excluded. If the above-described range is briefly described as described above, the addition amount of the amine hydrohalide and the addition amount of the organohalogen compound stay within a range satisfying a formula (1) as follows, in which the addition amount of the amine hydrohalide is indicated by X (weight %) and the addition amount of the organohalogen compound is indicated by Y (weight %), and an addition amount of the imidazole compound is 0.1 weight % to 10 weight %.

[Numerical Formula 2]

$$2.5 - X - 0.625Y \geq 0 \ \ldots(1)$$

$$0 \leq X \leq 2.5$$

$$0 \leq Y \leq 4$$

However, a range of $0 \leq X < 0.02$ and $0 \leq Y < 0.1$ is excluded.

[EFFECTS OF THE INVENTION]

According to the present invention, the metal oxide film is removed by reacting the activator components in the flux with the oxide on the metal surface, even in the low temperature range in which the solder alloy in the solder paste does not generally react with the flux. Since the metal oxide film can be removed in such low temperature range, the adhesion of metal powder to each other is increased so that even if any stress by the bend of the substrate or the like is applied thereto, it is possible to prevent the solder paste from being peeled from the subject to be joined.

[BRIEF DESCRIPTION OF THE DRAWINGS]

[Figure 1A] FIG 1A is a diagram showing an effect by a flux according to an embodiment of the present invention.

[Figure 1B] FIG 1B is a diagram showing the effect by the flux according to the embodiment of the present invention.

[Figure 1C] FIG 1C is a diagram showing the effect by the flux according to the embodiment of the present invention.

[Figure 2A] FIG. 2A is a diagram showing a problem when a semiconductor package has been reduced in thickness thereof.

[Figure 2B] FIG. 2B is a diagram showing the problem when the semiconductor package has been reduced in thickness thereof.

[Figure 2C] FIG. 2C is a diagram showing the problem when the semiconductor package has been reduced in thickness thereof.

[EMBODIMENT FOR CARRYING OUT THE INVENTION]

<Composition Example of Flux according to this Embodiment>

The flux according to this embodiment contains a halogen compound, an imidazole compound, an organic acid, rosin, a solvent, and a thixotropic agent. The flux according to this embodiment is mixed with the solder alloy powder to form a solder paste.

As the halogen compound, an amine hydrohalide and an organohalogen compound are exemplified. As an amine compound of the amine hydrohalide, ethylamine, diethylamine, dibutylamine, tributylamine, isopropylamine, diphenylguanidine, cyclohexylamine, aniline and the like are exemplified. As the hydrohalic acid, hydrochloric acid, hydrobromic acid and hydriodic acid are exemplified.

As the organohalogen compound, 1-buromo-2-butanol, 1-buromo-2-propanol, 3-buromo-1-propanol, 3-buromo-1,2-propanediol, 1,4-diburomo-2-butanol, 1,3-diburomo-2-propanol, 2,3-diburomo-1-propanol, 2,3-diburomo-1,4-butanediol, 2,3-diburomo-2-buten-1,4diol and the like are exemplified.

When an addition amount of the halogen compound is small, activity is weak and it is impossible to remove any oxide film at a predetermined low temperature region. On the other hand, when the addition amount of the halogen compound is large, viscosity of the solder paste is increased based on a change over time. Therefore, the addition amount of the halogen compound is set as follows.

The halogen compound is set to be either the amine hydrohalide or the organohalogen compound or a combination of them. The addition amount of the amine hydrohalide and the addition amount of the organohalogen compound stay within a range satisfying a following formula (1) in which the addition amount of the amine hydrohalide is indicated by X (weight %) and the addition amount of the organohalogen compound is indicated by Y (weight %).

[Numerical Formula 3]

$$2.5\text{-}X\text{-}0.625Y \geq 0 \ \dots(1)$$

$$0 \leq X \leq 2.5$$

$$0 \leq Y \leq 4$$

However, a range of $0 \leq X < 0.02$ and $0 \leq Y < 0.1$ is excluded.

The amine compound is added to the flux as an activator for removing the metal oxide film by reacting with the metal oxide film at a predetermined low temperature range, other than the halogen compound. It is preferable that the amine compound to be added as the activator is an imidazole compound. It preferably includes any of imidazole, 2-ethyl-4-methylimidazole, 4-methyl-2-phenylimidazole, 2- phenylimidazole, 2-ethylimidazole, and 2-methylimidazole, or a combination of them.

When an addition amount of the imidazole compound is small, activity is weak and it is impossible to remove any oxide film at a predetermined low temperature region. On the other hand, when the addition amount of the imidazole compound is large, viscosity of the solder paste is increased based on a change over time. Therefore, the addition amount of the imidazole compound is set to be 0.1 weight % to 10 weight %.

The rosin protects the activator components such as the halogen compound and the imidazole compound from heat to prevent the activator components from volatilizing. As the rosin, hydrogenated rosin, acid-modified rosin, polymerized rosin, rosin ester and the like are exemplified.

The solvent dissolves solid components in the flux. The solvent is selected from generally known glycol-ether-based compounds. In order to efficiently work the activator, it is preferable not to volatilize at the low temperature range of 120 degrees C to 150 degrees C. When the solvent volatilizes, fluidity of the flux deteriorates, so that it is difficult to permeate a function of the activator to whole of the metallic powder. Therefore, it is preferable that its boiling point is 200 degrees C or more. It is very preferable that the boiling point is 240 degrees C or more.

The thixotropic agent is added to give thixotropy. As the thixotropic agent, higher fatty acid amide, higher fatty acid ester, hydrogenated castor oil and the like are exemplified.

The organic acid is added as an activator component into the flux. As the organic acid, an organic acid that is solid at normal temperature such as adipic acid, suberic acid, and sebacic acid is preferable.

As other additive agent, any solvent other than the glycol-ether-based solvent, antioxidant, surfactant, defoaming agent, colorant or the like may be suitably added thereto unless the performance of flux is spoiled.

The organic acid is added for removing the oxide film from the solder alloy and the subject to be soldered over 150 degrees C that is a normal preliminary heating temperature. The addition amount thereof is set to be 1 weight % to 10 weight %. The rosin protects the activator components such as the halogen compound and the amine compound from heat to prevent the activator components from volatilizing. The addition amount of the rosin is set to be 40 weight % to 60 weight %. The solvent dissolves solid components in the flux. The addition amount of the solvent is set to be 25 weight % to 35 weight %. The thixotropic agent gives the solder paste the viscosity. The addition amount of the thixotropic agent is set to be 5 weight % to 10 weight %.

The solder paste according to this embodiment is formed by mixing the flux having the above-mentioned compositions with the solder alloy powder. The solder paste according to this embodiment is formed by mixing the flux with the solder alloy powder having solder alloy composition of Sn-3Ag-0.5Cu (each numerical value indicates weight %). This invention, however, is not limited to this solder alloy..

EXECUTED EXAMPLES

The fluxes of the executed examples and the comparison examples, which have the compositions shown in the following tables, were prepared. The solder pastes were prepared using the fluxes of the executed examples and the comparison examples. Peeling prevention effects of the solder pastes were inspected. It is to be noted that the composition rates in the Tables 1 to 3 are their weight % in the flux compositions. The evaluation method of each inspection will be described.

(1) Inspection of Peeling Prevention Effects of Solder Pastes

(a) Evaluation Method

After the solder paste was printed on copper plate, the solder ball was mounted and maintained at 120 degrees C for one minute. The solder ball was then pulled up in thermal insulation condition.

(b) Evaluation Criteria

○: The solder paste remained on the copper plate; or

X: The solder paste was peeled from the copper plate.

(2) Continuous Viscosity Measurement of Solder Pastes

(a) Measuring Method

A viscometer used in the measurement was PCU-205 made by Malcom Co., Ltd. The test conditions were set so that the viscosity was continuously measured for 8 hours while a number of revolutions were 10 rpm and the measuring temperature was 25 degrees C.

(b) Evaluation Criteria

When the viscosity after 8 hours elapsed was a value within a range of $\pm 20$ % of the initial viscosity, it was evaluated as being passed and this was indicated by "O".

In each of the executed examples 1 through 13, the amine hydrohalide was selected as the halogen compound and was added with it having a rate shown in the following Table 1. As the hydrohalic acid, hydrogen bromide (HBr) was selected. As the amine compound which forms salts by reacting with the hydrohalic acid, diphenylguanidine, diethylamine and isopropylamine were selected.

Further, in each of the executed examples 1 through 13, as the imidazole compound, imidazole, 2-ethyl-4-methylimidazole, 4-methyl-2-phenylimidazole, 2- phenylimidazole, 2-ethylimidazole, and 2-methylimidazole were added with them having rates shown in the following Table 1.

EP 3 219 433 A1

[Table 1]

| | EXE-CUTED EXAM-PLE 1 | EXE-CUTED EXAM-PLE 2 | EXE-CUTED EXAM-PLE 3 | EXE-CUTED EXAM-PLE 4 | EXE-CUTED EXAM-PLE 5 | EXE-CUTED EXAM-PLE 6 | EXE-CUTED EXAM-PLE 7 | EXE-CUTED EXAM-PLE 8 | EXE-CUTED EXAM-PLE 9 | EXE-CUTED EXAM-PLE 10 | EXE-CUTED EXAM-PLE 11 | EXE-CUTED EXAM-PLE 12 | EXE-CUTED EXAM-PLE 13 | COM-PARISON EXAM-PLE 1 | COM-PARISON EXAM-PLE 2 | COM-PARISON EXAM-PLE 3 | COM-PARISON EXAM-PLE 4 |
|---|---|---|---|---|---|---|---|---|---|---|---|---|---|---|---|---|---|
| ROSIN | 55.9 | 46 | 51 98 | 495 | 445 | 51 | 51 | 51 | 51 | 51 | 51 | 51 | 51 | 56.99 | 54 | 56.95 | 42 |
| SOLVENT | 30 | 30 | 30 | 30 | 30 | 30 | 30 | 30 | 30 | 30 | 30 | 30 | 30 | 30 | 30 | 30 | 30 |
| THIXOTROPIC AGENT | 7 | 7 | 7 | 7 | 7 | | 7 | 7 | 7 | 7 | 7 | 7 | 7 | 7 | 7 | 7 | 7 |
| ORGANIC ACID | 6 | 6 | 6 | 6 | 6 | | 6 | 6 | 6 | 6 | 6 | 6 | 6 | 6 | 6 | 6 | 6 |
| DIPHENYLGUANIDINE·HBr | 1 | 1 | 002 | 25 | 25 | 1 | | | 1 | 1 | 1 | 1 | 1 | 001 | 3 | | |
| DIETHYLAMINE·HBr | | | | | | | 1 | | | | | | | | | | |
| ISOPROPYLAMINE·HBr | | | | | | | | 1 | | | | | | | | | |
| IMIDAZOLE | 0.1 | 10 | 5 | 5 | 10 | 5 | 5 | 5 | | | | | | | | 0.05 | 15 |
| 2-METHYLIMIDAZOLE | | | | | | | | | 5 | | | | | | | | |
| 2-ETHYLIMIDAZOLE | | | | | | | | | | 5 | | | | | | | |
| 2-PHENYLIMIDAZOLE | | | | | | | | | | | 5 | | | | | | |
| 2-ETHYL-4-METHYLIMIDAZOLE | | | | | | | | | | | | 5 | | | | | |
| 4-METHYL-2-PHE-NYLIMIDAZOLE | | | | | | | | | | | | | 5 | | | | |
| PEELING PREVEN-TION EFFECT | ○ | ○ | ○ | ○ | ○ | ○ | ○ | ○ | ○ | ○ | ○ | ○ | ○ | × | ○ | × | ○ |
| CONTINUOUS VIS-COSITY | ○ | ○ | ○ | ○ | ○ | ○ | ○ | ○ | ○ | ○ | ○ | ○ | ○ | ○ | × | ○ | × |

As shown in the Table 1, in the executed examples 1 through 13 which contained the amine hydrohalide and the imidazole compound, and in which the addition amount X of the amine hydrohalide was 0.02 weight % to 2.5 weight % and the addition amount of the imidazole compound was 0.1 weight % to 10 weight %, the solder paste remained on the copper plate. On the other hand, in the comparison example 1 which did not contain any organohalogen compound and in which the addition amount of the amine hydrohalide was less than 0.02 weight % and the imidazole compound was not contained, and the comparison example 3 which did not contain any halogen compound and in which the addition amount of the imidazole compound was less than 0.1 weight %, the solder paste was adhered to the solder ball and peeled from the copper plate. In the comparison example 2 which did not contain any organohalogen compound and in which the addition amount of the amine hydrohalide exceeded 2.5 weight % and the imidazole compound was not contained, and the comparison example 4 which did not contain any halogen compound and in which the addition amount of the imidazole compound exceeded 10 weight %, a tendency to increase the viscosity was seen in the continuous viscosity measurement.

In the executed examples 14 to 25, as the halogen compound, the organohalogen compounds were selected and 2,3-diburomo-1,4-butanediol and 2,3-diburomo-2-buten-1,4-diol were added with them having rates shown in the following Table 2.

In addition, in the executed examples 14 to 25, as the imidazole compound, imidazole, 2-ethyl-4-methylimidazole, 4-methyl-2-phenylimidazole, 2- phenylimidazole, 2-ethylimidazole, and 2-methylimidazole were added with them having rates shown in the following Table 2.

[Table 2]

| | EXECUTED EXAMPLE 14 | EXECUTED EXAMPLE 15 | EXECUTED EXAMPLE 16 | EXECUTED EXAMPLE 17 | EXECUTED EXAMPLE 18 | EXECUTED EXAMPLE 19 | EXECUTED EXAMPLE 20 | EXECUTED EXAMPLE 21 | EXECUTED EXAMPLE 22 | EXECUTED EXAMPLE 23 | EXECUTED EXAMPLE 24 | EXECUTED EXAMPLE 25 | COMPARISON EXAMPLE 5 | COMPARISON EXAMPLE 6 |
|---|---|---|---|---|---|---|---|---|---|---|---|---|---|---|
| ROSIN | 51.9 | 48 | 54.9 | 45 | 43 | 50 | 50 | 50 | 50 | 50 | 50 | 50 | 56.95 | 52 |
| SOLVENT | 30 | 30 | 30 | 30 | 30 | 30 | 30 | 30 | 30 | 30 | 30 | 30 | 30 | 30 |
| THIXOTROPIC AGENT | 7 | 7 | 7 | 7 | 7 | 7 | 7 | 7 | 7 | 7 | 7 | 7 | 7 | 7 |
| ORGANIC ACID | 6 | 6 | 6 | 6 | 6 | 6 | 6 | 6 | 6 | 6 | 6 | 6 | 6 | 6 |
| 2,3-DIBUROMO-1,4-BUTANEDIOL | 0.1 | 4 | 2 | 2 | 4 | 2 | | 2 | 2 | 2 | 2 | 2 | 0.05 | 5 |
| 2,3-DIBUROMO-2-BUTEN-1 4-DIOL | | | | | | | 2 | | | | | | | |
| IMIDAZOLE | 5 | 5 | 0.1 | 10 | 10 | 5 | 5 | | | | | | | |
| 2-METHYLIMIDAZOLE | | | | | | | | 5 | | | | | | |
| 2-ETHYLIMIDAZOLE | | | | | | | | | 5 | | | | | |
| 2-PHENYLIMIDAZOLE | | | | | | | | | | 5 | | | | |
| 2-ETHYL-4-METHYLIMIDAZOLE | | | | | | | | | | | 5 | | | |
| 4-METHYL-2-PHENYLIMIDAZOLE | | | | | | | | | | | | 5 | | |
| PEELING PREVENTION EFFECT | ○ | ○ | ○ | ○ | ○ | ○ | ○ | ○ | ○ | ○ | ○ | ○ | × | ○ |
| CONTINUOUS VISCOSITY | ○ | ○ | ○ | ○ | ○ | ○ | ○ | ○ | ○ | ○ | ○ | ○ | ○ | × |

As shown in the Table 2, in the executed examples 14 through 25 which contained the organohalogen compound and the imidazole compound, and in which the addition amount Y of the organohalogen compound was 0.1 weight % to 4 weight % and the addition amount of the imidazole compound was 0.1 weight % to 10 weight %, the solder paste remained on the copper plate. On the other hand, in the comparison example 5 which did not contain any amine hydrohalide and in which the addition amount of the organohalogen compound was less than 0.1 weight % and the imidazole compound was not contained, the solder paste was adhered to the solder ball and peeled from the copper plate. In the comparison example 6 which did not contain any amine hydrohalide and in which the addition amount of the organohalogen compound exceeded 4 weight % and the imidazole compound was not contained, a tendency to increase the viscosity was seen in the continuous viscosity measurement.

From the Tables 1 and 2, it is determined that the addition amount of the amine hydrohalide is 0.02 weight % or more to 2.5 weight % or less and the addition amount of the organohalogen compound is 0.1 weight % or more to 4 weight % or less.

Accordingly, as the halogen compound, both of the amine hydrohalide and the organohalogen compound were selected and diphenylguanidine·HBr and 2,3-diburomo-1,4-butanediol were added with them having rates shown in the following Table 3.

[Table 3]

| | EXECUTED EXAMPLE 26 | EXECUTED EXAMPLE 27 | EXECUTED EXAMPLE 28 | EXECUTED EXAMPLE 29 | EXECUTED EXAMPLE 30 | COMPARISON EXAMPLE 7 | COMPARISON EXAMPLE 8 | COMPARISON EXAMPLE 9 |
|---|---|---|---|---|---|---|---|---|
| ROSIN | 49 | 49.5 | 48.5 | 49.95 | 48.99 | 47 | 48.5 | 47.5 |
| SOLVENT | 30 | 30 | 30 | 30 | 30 | 30 | 30 | 30 |
| THIXOTROPIC AGENT | 7 | 7 | 7 | 7 | 7 | 7 | 7 | 7 |
| ORGANIC ACID | 6 | 6 | 6 | 6 | 6 | 6 | 6 | 6 |
| DIPHENYLGUANIDINE·HBr | 1.5 | 2 | 0.5 | 2 | 0.01 | 2 | 2.5 | 0.5 |
| 2,3-DIBUROMO-1,4-BUTANEDIOL | 1.5 | 0.5 | 3 | 0.05 | 3 | 3 | 1 | 4 |
| IMIDAZOLE | 5 | 5 | 5 | 5 | 5 | 5 | 5 | 5 |
| PEELING PREVENTION EFFECT | ○ | ○ | ○ | ○ | ○ | ○ | ○ | ○ |
| CONTINUOUS VISCOSITY | ○ | ○ | ○ | ○ | ○ | × | × | × |

As shown in the Table 3, in the comparison examples 7 through 9, a tendency to increase the viscosity was seen in the continuous viscosity measurement even when the addition amount of the amine hydrohalide is 0.02 weight % or more to 2.5 weight % or less and the addition amount of the organohalogen compound is 0.1 weight % or more to 4 weight % or less.

According to the executed examples 1 through 28, when the addition amount of the amine hydrohalide is 0.02 weight % or more to 2.5 weight % or less and the addition amount of the organohalogen compound is 0.1 weight % or more to 4 weight % or less, the addition amount of the amine hydrohalide and the addition amount of the organohalogen compound become addition amounts satisfying a formula (1) as follows, in which the addition amount of the amine hydrohalide is indicated by X (weight %) and the addition amount of the organohalogen compound is indicated by Y (weight %).

[Numerical Formula 4]

$$2.5-X-0.625Y \geq 0 \ldots(1)$$

$$0.02 \leq X \leq 2.5$$

$$0.1 \leq Y \leq 4$$

The executed examples 29 and 30 indicated results satisfying both of the peeling prevention effect and the continuous viscosity measurement even when the addition amount of the amine hydrohalide and the addition amount of the organohalogen compound did not stay within the range such that the addition amount of the amine hydrohalide was 0.02 weight % or more to 2.5 weight % or less and the addition amount of the organohalogen compound was 0.1 weight % or more to 4 weight % or less. This indicates that when the addition amount of either the amine hydrohalide or the organohalogen compound to obtain the peeling prevention effect by itself is added, no problem occur even if the other has an addition amount not to obtain the peeling prevention effect by itself. However, it is expected that if each has an addition amount not to obtain the peeling prevention effect by itself, the prevention effect could be reduced.

From the Tables 1 to 3, the addition amount of the amine hydrohalide and the addition amount of the organohalogen compound become addition amounts satisfying the formula (1) as follows, in which the addition amount of the amine hydrohalide is indicated by X (weight %) and the addition amount of the organohalogen compound is indicated by Y (weight %).

[Numerical Formula 5]

$$2.5-X-0.625Y \geq 0 \ldots(1)$$

$$0 \leq X \leq 2.5$$

$$0 \leq Y \leq 4$$

However, a range of $0 \leq X < 0.02$ and $0 \leq Y < 0.1$ is excluded.

From the above inspection results, it is understood that the activator components in the flux reacts with any oxide on the metal surface in the low temperature range in which any reaction does not normally occur between the solder alloy in the solder paste and the flux to remove the metal oxide film, so that the adhesion of metal powder to each other in the solder paste is increased, which causes the solder paste to remain on the substrate. By a rise in such holding force, even if any stress by the bend of the substrate or the like is applied thereto, it is possible to prevent the solder paste from being peeled from the electrode.

<Example of Effect according to Embodiment of Present Invention>

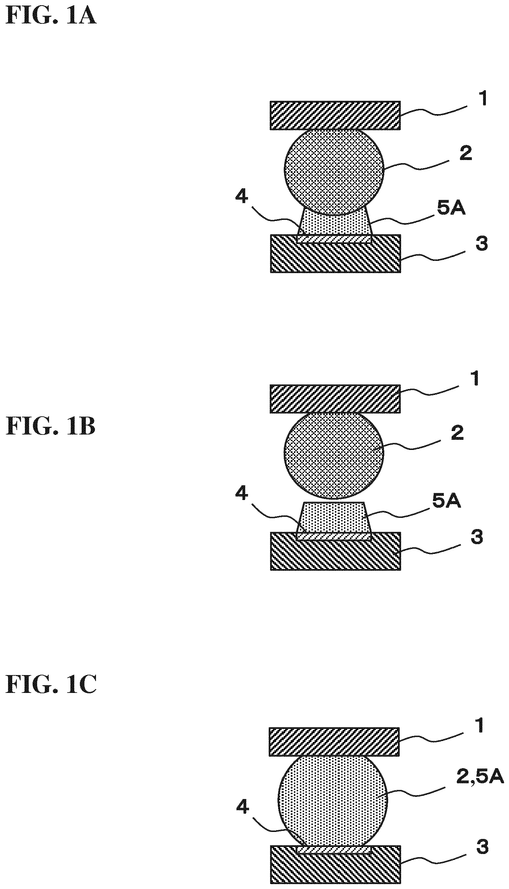

FIGS. 1A to 1C are diagrams each showing the effect by the flux according to the embodiment of the present invention. A solder bump 2 is formed to an electrode, not shown, of a semiconductor package 1. Further, a solder paste 5A is applied onto an electrode 4 of a substrate 3. As shown in FIG. 1A, in a step before the reflow, the solder bump 2 and the solder paste 5A applied to the electrode 4 are contacted to each other.

In the preliminary heating step, by heating during the reflow, temperature of the substrate 3 and the like is gradually increased at temperature lower than the solder melting temperature. By reducing the thickness of semiconductor package 1, the bend occurs in the semiconductor package 1 in the low temperature range of about 120 degrees C to about 150 degrees C that is lower temperature range than the main active temperature zone of the flux.

Even when the bend occurs in the semiconductor package 1, as shown in FIG. 1B, the solder paste 5A is not peeled from the electrode 4 in the solder paste 5A in which the flux according to the embodiment and the solder alloy powder are mixed. Thus, even when the bend occurs in the semiconductor package 1 at pre-heating time, the solder paste 5A is not peeled from the electrode 4, so that it is possible to remove the metal oxide film from the surface of the electrode 4.

When increasing the temperature in the reflow furnace up to the main heating temperature at which the solder alloy is melted, the solder alloy in the solder paste 5A is melted, so that the electrode 4 and the solder alloy in the solder paste 5A are joined with each other, as shown in FIG. 1C.

When the solder alloy in the solder paste 5A is then melted, the semiconductor package 1 supported by the substrate 3 through the solder paste 5A creeps down. The descent of the semiconductor package 1 allows the solder bump 2 of the semiconductor package 1 and the solder paste 5A applied to the electrode 4, which has been away from each other by the bend of the semiconductor package 1, to be contacted to each other.

The volatilization of activator component in the flux is suppressed by the rosin and by contacting the solder bump 2 of the semiconductor package 1 and the solder paste 5A applied to the electrode 4 again, the metal oxide film on the surface of the solder bump 2 is removed.

The solder bump 2 and the solder alloy in the solder paste 5A are thereby fused. Therefore, even when the bend occurs in the semiconductor package 1 during the reflow process, the solder bump 2 of the semiconductor package 1 and the electrode 4 of the substrate 3 are electrically contacted to each other through the solder alloy.

INDUSTRIAL APPLICABILITY

This invention is applicable to the soldering of electronic component to which BGA is applied.

[Explanation of References]

1: Semiconductor Package
2: Solder Bump
3: Substrate
4: Electrode
5A, 5B: Solder Paste

**Claims**

1. A flux for a solder paste, the flux comprising:

rosin;
a glycol-ether-based solvent;
an organic acid;
a thixotropic agent;
a halogen compound; and
an imidazole compound, wherein the halogen compound is either an amine hydrohalide or an organohalogen compound or a combination of them,
an addition amount of the amine hydrohalide is 0 weight % or more to 2.5 weight % and an addition amount of the organohalogen compound is 0 weight % or more to 4 weight %,
when the addition amount of the amine hydrohalide is 0 weight % or more to less than 0.02 weight %, the addition amount of the organohalogen compound of 0 weight % or more to less than 0.1 weight % is excluded,
when the addition amount of the organohalogen compound is 0 weight % or more to less than 0.1 weight %, the addition amount of the amine hydrohalide of 0 weight % or more to less than 0.02 weight % is excluded,
the addition amount of the amine hydrohalide and the addition amount of the organohalogen compound stay within a range satisfying a formula (1) as follows:

$$2.5-X-0.625Y \geq 0 \ \dots(1)$$

in which the addition amount of the amine hydrohalide is indicated by X (weight %) and the addition amount of the organohalogen compound is indicated by Y (weight %), and
an addition amount of the imidazole compound is 0.1 weight % to 10 weight %.

2. The flux for the solder paste according to Claim 1, **characterized in that** the amine hydrohalide is salt of amine compound and hydrohalic acid,
the amine compound includes any of ethylamine, diethylamine, dibutylamine, tributylamine, isopropylamine, diphenylguanidine, cyclohexylamine and aniline, and
the hydrohalic acid includes any of hydrochloric acid, hydrobromic acid and hydriodic acid, any of the amine hydrohalide, or a combination of them. ,

3. The flux for the solder paste according to Claim 1 or 2, **characterized in that** the organohalogen compound includes any of 1-buromo-2-butanol, 1-buromo-2-propanol, 3-buromo-1-propanol, 3-buromo-1,2-propanediol, 1,4-diburomo-2-butanol, 1,3-diburomo-2-propanol, 2,3-diburomo-1-propanol, 2,3-diburomo-1,4-butanediol, and 2,3-diburomo-2-buten-1,4diol, or a combination of them.

4. The flux for the solder paste according to any one of Claims 1 through 3, **characterized in that** the imidazole compound includes any of imidazole, 2-ethyl-4-methylimidazole, 4-methyl-2-phenylimidazole, 2- phenylimidazole, 2-ethylimidazole, and 2-methylimidazole, or a combination of them.

5. A solder paste **characterized in that** the solder paste contains the mixture of the flux for the solder paste according to Claims 1 through 4 and solder alloy powder.

6. A solder joint **characterized in that** the solder joint is formed by the solder paste according to Claim 5.

FIG. 1A

FIG. 1B

FIG. 1C

**FIG. 2A**

**FIG. 2B**

**FIG. 2C**

## INTERNATIONAL SEARCH REPORT

| International application No. |
| --- |
| PCT/JP2015/081308 |

| A. CLASSIFICATION OF SUBJECT MATTER |
| --- |
| *B23K35/363*(2006.01)i |

According to International Patent Classification (IPC) or to both national classification and IPC

| B. FIELDS SEARCHED |
| --- |

Minimum documentation searched (classification system followed by classification symbols)
B23K35/363

Documentation searched other than minimum documentation to the extent that such documents are included in the fields searched

| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 2002-86292 A  (Showa Denko Kabushiki Kaisha),<br>26 March 2002 (26.03.2002),<br>paragraphs [0019] to [0033], [0046]; examples<br>& US 2001/0042779 A1<br>paragraphs [0034] to [0048], [0061]; examples<br>& WO 2001/058639 A1     & CN 1358123 A<br>& TW 503147 B | 1-3,5-6<br>4 |
| X<br>Y | JP 2003-225795 A  (Showa Denko Kabushiki Kaisha),<br>12 August 2003 (12.08.2003),<br>paragraphs [0039] to [0042], [0048] to [0054];<br>examples<br>(Family: none) | 1-3,5-6<br>4 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    04 February 2016 (04.02.16) | Date of mailing of the international search report<br>    16 February 2016 (16.02.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2015/081308 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2014-144473 A  (Tamura Corp.),<br>14 August 2014 (14.08.2014),<br>paragraphs [0016] to [0030]; table 1<br>& CN 103962753 A        & TW 201429602 A | 1-3,5-6<br>4 |
| X<br>Y | JP 2005-59028 A  (Toshiba Corp.),<br>10 March 2005 (10.03.2005),<br>paragraphs [0025] to [0032], [0042] to [0043];<br>examples<br>& US 2005/0056687 A1<br>paragraphs [0035] to [0045], [0055] to [0056];<br>examples<br>& CN 1579698 A | 1-2,4-6<br>4 |
| X<br>Y | JP 2014-117737 A  (Nihon Handa Co., Ltd.),<br>30 June 2014 (30.06.2014),<br>paragraphs [0015], [0020] to [0032]; examples<br>(Family: none) | 1-2,4-6<br>4 |
| X | JP 2014-36985 A  (Tamura Corp.),<br>27 February 2014 (27.02.2014),<br>paragraphs [0012], [0016] to [0024]; examples<br>& CN 103586602 A        & KR 10-2014-0023220 A | 1,3-6 |

Form PCT/ISA/210 (continuation of second sheet) (January 2015)

**EP 3 219 433 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008071779 A